# EUROPEAN PATENT SPECIFICATION

(11) **EP 3 818 260 B1**
(45) Date of publication and mention of the grant of the patent: **07.09.2022**
(21) Application number: 18740142.7
(22) Date of filing: 04.07.2018
(51) Int. Cl.: F02D 41/00, F02D 41/30, F02D 13/02, F02D 19/10, F02D 35/02

(54) **METHOD OF INCREASING LOAD IN A FOUR STOKE INTERNAL COMBUSTION ENGINE**
VERFAHREN ZUR ERHÖHUNG DER LAST IN EINER VIERTAKTBRENNKRAFTMASCHINE
PROCÉDÉ D'AUGMENTATION DE LA CHARGE DANS UN MOTEUR À COMBUSTION INTERNE À QUATRE TEMPS

(43) Date of publication of application: 12.05.2021
(73) Proprietor: Wärtsilä Finland Oy, 65100 Vaasa (FI)
(72) Inventor: AXELSSON, Martin, 65380 Vaasa (FI); NORDMAN, Vesa, 65380 Vaasa (FI); DELNERI, Diego, 34018 Trieste (IT)
(74) Representative: Genip Oy
(86) International application number: PCT/EP2018/068021
(87) International publication number: WO 2020/007456

(56) References cited:
- EP-A1- 3 339 616
- EP-B1- 3 339 616
- WO-A2-01/86128
- US-A1- 2012 046 854
- US-A1- 2015 285 178

## Description

### Technical field

The present invention relates to method of increasing load in a four stoke internal combustion engine utilizing homogeneous charge compression ignition (HCCI) and reactivity controlled compression ignition (RCCI) for combustion gaseous and liquid fuel in the engine.

### Background art

Internal combustion piston engine is a known power source for electricity production in stationary power plants as well as in marine vessels. It is also known to operate such engine by making use of gaseous fuel. Environmental issues in the field of internal combustion piston engines have an ever increasing role in the developments in the field. The stringent demands of the present regulations and expectations require use of accurate control system for operating the engines. There are various methods known as such the decrease NOx emissions in internal combustion engines, some of which relate to treatment of exhaust gases and some of which relate to the combustion process itself. During the operation of an internal combustion engine nitrogen oxides (NOx) are formed. NOx is produced during the combustion process in an engine due to high temperature in the presence of oxygen and nitrogen. Therefore the process related methods of reducing NOx emission aim to control formation of temperature peaks during the combustion. However, it is evident that the combustion circumstances vary depending particularly on the load of the engine.

Homogeneous charge compression ignition (HCCI) uses a well-mixed fuel and air compressed to the point of auto-ignition. Reactivity controlled compression ignition (RCCI) utilizes two fuels with different reactivities and multiple fuel injections to control air-fuel mixture reactivity in engine cylinders.

US2016097338A discloses a method of operating a compression ignition engine uses an engine having a cylinder and a piston moveable in the cylinder. The method includes forming a combustible mixture by mixing generally homogeneously a first fuel and air and introducing this mixture into the at least one cylinder, and compressing the combustible mixture with the piston in a compression stroke. During the compression stroke but before start of combustion, a second fuel is added to the combustible mixture, thus creating a cylinder charge, the second fuel being easier to autoignite than the first fuel. The compression stroke is continued until combustion starts at those locations in the cylinder where concentration of the second fuel and/or temperature of the mixture is highest. A temperature of the cylinder charge and/or the amount of second fuel added to the combustible mixture is chosen such that a desired duration of combustion can be achieved.

US2015315957A discloses a compression ignition engine includes a piston having a barrier protruding axially therefrom. The barrier at least partly defines a combustion chamber having a first zone separated from a second zone by the barrier. An initial fuel charge is supplied into the combustion chamber, and a subsequent fuel charge is supplied into the first zone, the subsequent fuel charge having greater reactivity than the initial fuel charge. The fuel charges are compressed to induce ignition and combustion of the fuel charges, such that the subsequent fuel charge burns within the first zone to produce hot gases, and the hot gases flow across the barrier to effect combustion of the initial fuel charge within the second zone.

WO16005426A1 discloses a method of starting and/or stabilizing a reactant controlled compression ignition (RCCI) combustion system includes determining an amount of intake oxygen (O2) flowing into a cylinder of an engine from an engine intake during an intake stage of the cylinder, calculating an amount of primary fuel reactant (PFR) and/or a secondary fuel reactant (SFR) to be injected into the cylinder to achieve a stoichiometric oxygen-to-fuel ratio, introducing the SFR into at least one cylinder before or during a compression stage of the at least one cylinder such that the SFR and the O2 create a compressed mixture after the compression stage, combining the PFR with the compressed mixture, wherein the PFR and the compressed mixture homogenously burn upon ignition.

US2016097316A discloses method for operating a compression ignition engine includes forming a combustible mixture by mixing generally homogeneously a first fuel and air and introducing this mixture into the at least one cylinder, compressing the combustible mixture with the piston in a compression stroke, injecting a second fuel to the combustible mixture at an injection-time of the second fuel during the compression stroke but before start of combustion, and continuing the compression stroke until combustion starts at those locations in the at least one cylinder where concentration of the second fuel is highest and/or the temperature of the mixture is the highest. Emission of the cylinder and/or mechanical stress of the cylinder caused by the combustion are monitored, and if emissions and/or mechanical stress are above respective predetermined thresholds, individually for the cylinder, the amount and/or the timing of the second fuel .injected, and/or temperature of the cylinder charge is changed

US2015285178A a reactivity controlled compression ignition engine compression which ignites a stratified reactivity charge mixture, of recirculated exhaust gas, air, a low reactivity fuel and a high reactivity fuel. During steady state operating conditions, combustion phasing control includes adjusting an exhaust gas recirculation (EGR) rate relative to a base EGR rate associated with the steady speed and load. When transitioning to a new speed and load during a transient condition, combustion phasing control does not utilize EGR rate control, but does include adjustments to quantities and timings of at least three injection sequences of the high reactivity fuel.

DE 102015212244 A1 discloses a process related method which suggests three different load ranges to be operated in different manners. In high loads, an air-fuel mixture has first fuel, recirculated exhaust gas, and second fuel, different from the first fuel is supplied to the combustion chamber of the engine. The ignition of the charge, which comprises the homogeneous combustion air-fuel mixture with the first fuel, the recirculated exhaust gas, and the at least partially homogenized present second fuel is externally ignited by means of the ignition device i.e. a spark plug. In a middle load operation, a combustion air-fuel mixture comprising the first fuel, recirculated exhaust gas, and the second fuel are supplied, an auto-ignition is used for ignition of the charge in the combustion chamber. In a low load mode, a combustion air-fuel mixture having the first fuel is supplied, an ignition in the combustion chamber by activating the ignition device. Preferably, in the third mode, a pure gasoline combustion method with spark ignition is realized. DE 102015212244 A1 suggest to use homogeneous charge compression ignition in the middle load operation.

WO0186128 describes an internal combustion engine operable in a premixed charge compression ignition mode where at least a portion of fuel combusted in a PCCI combustion event.

EP3339616 describes an engine operated in a PCCI mode in low load and an RCCI mode in high load.

An object of the invention is to provide a method of operating a four stoke internal combustion engine in which the performance is considerably improved compared to the prior art solutions.

### Disclosure of the Invention

Objects of the invention can be met substantially as is disclosed in the independent claim and in the other claims describing more details of different embodiments of the invention.

According to an embodiment of the invention method of increasing load in a four stoke internal combustion engine comprising first operating the engine in a low load range mode comprising steps of
- introducing gaseous fuel into the intake air during an intake stroke of the engine
- introducing the gaseous fuel and intake air into a combustion chamber of a cylinder of the engine during the intake stroke, and
- leading exhaust gas into the combustion chamber of the cylinder
- introducing liquid fuel into the combustion chamber of the cylinder
- compressing the charge comprising the air, the gaseous fuel, the liquid fuel and the recirculated exhaust gas in the combustion chamber
- igniting the charge by compression ignition in the combustion chamber and when at least one variable indicative of engine's load exceeds a predetermined transition level of the variable, increasing the load of the engine into a high load range mode comprising steps of
- introducing gaseous fuel into the intake air
- introducing the gaseous fuel and the intake air into a combustion chamber of a cylinder of the engine during an intake stroke, and
- introducing a first portion of liquid fuel into the combustion chamber of the cylinder
- compressing the charge comprising the air, the gaseous fuel and the liquid fuel in the combustion chamber
- injecting a second portion of liquid fuel (26) into the combustion chamber (28) for initiating reactivity controlled compression ignition.

The reactivity controlled compression ignition proceeds after the initiation by igniting the second portion of the liquid fuel by compression ignition which ignites the charge in the combustion chamber.

Operating a four stoke internal combustion engine comprises operating an engine alternatively in a low load range mode and in a high load range mode, wherein the low load range mode comprising
- introducing gaseous fuel into the intake air during an intake stroke of the engine
- introducing the gaseous fuel and intake air into a combustion chamber of a cylinder of the engine during the intake stroke, and
- leading exhaust gas into the combustion chamber of the cylinder
- introducing liquid fuel into the combustion chamber of the cylinder
- compressing the charge comprising the air, the gaseous fuel, the liquid fuel and the recirculated exhaust gas in the combustion chamber
- igniting the charge by compression ignition in the combustion chamber and wherein the high load range mode comprising
- introducing gaseous fuel into the intake air
- introducing the gaseous fuel and the intake air into a combustion chamber of a cylinder of the engine during an intake stroke, and
- introducing a first portion of liquid fuel into the combustion chamber of the cylinder
- compressing the charge comprising the air, the gaseous fuel and the liquid fuel in the combustion chamber
- injecting a second portion of liquid fuel into the combustion chamber for initiating reactivity controlled compression ignition such that compression ignition proceeds after the initiation by igniting the second portion of the liquid fuel by compression ignition which ignites the charge in the combustion chamber.

According to an embodiment of the invention during the engine is running at least one variable indicative of engine's load is determined constantly or intermittently, and the variable indicative of engine's load is compared to a predetermined transition level of the variable, and when the at least one variable indicative of engine's load is less than or equal to the predetermined transition level, the engine is run in a low load range mode, and when the at least one variable indicative of engine's load is more than the predetermined transition level, the engine is run in a high load range mode.

According to an embodiment of the invention the low load range is from 0% to a predetermined transition load, and the high load range is from the predetermined transition load to 100% load, wherein the predetermined transition load is between 50 - 80 % load, more advantageous the predetermined transition load percent is between 65 - 70 % load.

According to an embodiment of the invention the low load range running exhaust gas is led from an exhaust channel of the cylinder into the combustion chamber of the cylinder within a crank angle range from 450 degrees to 670 degrees, wherein one cycle of the cylinder starts at 0 degrees at TDC of expansion stroke and ends at 720 degrees at TDC of compression stroke.

According to an embodiment of the invention in the low load range running exhaust gas is led directly from an exhaust channel of the cylinder into the combustion chamber of the cylinder through an exhaust port of the cylinder.

According to an embodiment of the invention the low load range running exhaust gas is led from an exhaust channel of the cylinder into the combustion chamber of the cylinder within a crank angle range from 450 degrees to 670 degrees, wherein one cycle of the cylinder starts at 0 degrees at TDC of expansion stroke and ends at 720 degrees at TDC of compression stroke and in the low load range running exhaust gas is led directly from an exhaust channel of the cylinder into the combustion chamber of the cylinder through an exhaust port of the cylinder.

According to an embodiment of the invention the low load range running exhaust gas is led from an exhaust channel of the cylinder into the combustion chamber of the cylinder within a crank angle range from 450 degrees to 670 degrees, wherein one cycle of the cylinder starts at 0 degrees at TDC of expansion stroke and ends at 720 degrees at TDC of compression stroke and in the low load range running exhaust gas is led directly from an exhaust channel of the cylinder into the combustion chamber of the cylinder through an exhaust port of the cylinder by opening an exhaust valve in the exhaust port.

According to an embodiment of the invention in the low load range running liquid fuel is introduced into the combustion chamber of the cylinder within a crank angle range from 540 degrees CA to 640 degrees CA, wherein one cycle of the cylinder starts at 0 degrees CA at TDC of expansion stroke and ends at 720 degrees CA at TDC of compression stroke.

According to an embodiment of the invention in the low load range running liquid fuel is introduced into the combustion chamber of the cylinder within a crank angle range from 510 degrees CA to 680 degrees CA, wherein one cycle of the cylinder starts at 0 degrees CA at TDC of expansion stroke and ends at 720 degrees CA at TDC of compression stroke.

According to an embodiment of the invention in the low load range running the timing and/or duration of the exhaust valve opening, an amount of the gaseous fuel and an amount of liquid fuel in the charge are controlled so as to ignite the charge at desired crank angle between 665 - 720 degrees CA by homogeneous charge compression ignition, wherein one cycle of the cylinder starts at 0 degrees CA at TDC of expansion stroke and ends at 720 degrees CA at TDC of compression stroke.

According to an still another embodiment of the invention in the low load range running the timing and/or duration of the exhaust valve opening, an amount of the gaseous fuel and an amount of liquid fuel in the charge are controlled so as to ignite the charge at desired crank angle from 665 degrees CA to more than 730 degrees CA, by homogeneous charge compression ignition, wherein one cycle of the cylinder starts at 0 degrees CA at TDC of expansion stroke and ends at 720 degrees CA at TDC of compression stroke.

According to an embodiment of the invention the low load range running comprising liquid fuel into the combustion chamber comprises one or more separate injections at different crank angles.

According to an embodiment of the invention the high load range running the first portion of the liquid fuel is introduced into the combustion chamber of the cylinder within a crank angle range from 510 degrees CA to 680 degrees CA, wherein one cycle of the cylinder starts at 0 degrees CA at TDC of expansion stroke and ends at 720 degrees CA at TDC of compression stroke.

According to an embodiment of the invention the high load range running the second portion of the liquid fuel is introduced in into the combustion chamber at crank angle between 665 - 720 degrees CA, wherein one cycle of the cylinder starts at 0 degrees CA at TDC of expansion stroke and ends at 720 degrees CA at TDC of compression stroke.

Invention relates also to a computer readable memory device comprising instructions which, when executed by a computer, cause the computer to carry out a method according to the invention

By means of the invention it is possible considerably reduce particularly NOx emission, unburned hydrogen carbon emissions while engine performance is still improved compared to dual fuel engines according to prior art.

Load is an external restraining torque being applied to the engine. For the case where the engine is operating at a constant speed, the load torque is equal and opposite to the drive torque being generated by the engine. Homogeneous charge compression ignition (HCCI) is achieved by controlling the air-gas mixture self-ignition point adjusting the compression end temperature (by recirculating the proper amount of exhaust gases) and the air-gas mixture reactivity (through early liquid fuel injection). The combustion phasing is closed loop controlled cylinder wise based on real time heat release data calculated from crank angle resolved signal from in-cylinder pressure sensor by adjusting liquid fuel injected quantity.

Reactivity controlled compression ignition (RCCI) utilizes as well two fuels with different reactivities and multiple fuel injections - at least one for premixing a fuel containing charge and one for igniting the charge. As before, one of the fuels has a lower reactivity as compared to the other fuel. A homogenous charge comprising the low reactivity fuel, the high reactivity fuel, and air is formed in an engine cylinder. As a piston in the cylinder compresses the homogenous mixture, the higher reactivity fuel may be injected at a time before ignition of the homogenous mixture is ignited by further injection of higher reactivity fuel. Combustion of the air-fuel mixture may be controlled in this way to reduce NOx and particulate matter while improving engine fuel economy.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates schematically a flow chart describing the method of increasing load of a four stroke internal combustion piston engine according to an embodiment of the invention,
Figure 2 illustrates schematically an operational mode of a four stoke internal combustion engine according to an embodiment of the invention,
Figure 3 illustrates schematically an operational mode of a four stoke internal combustion engine according to another embodiment of the invention,
Figure 4 illustrates an exemplary gas exchange valve and liquid fuel injection operation according to an embodiment of the invention,

### Detailed Description of Drawings

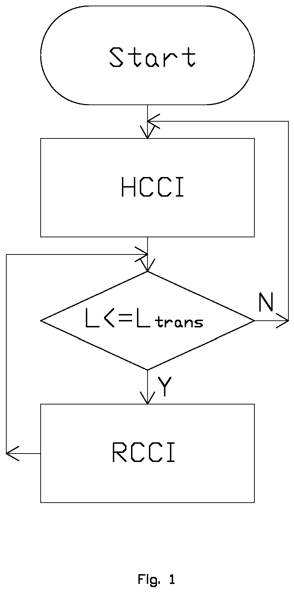

Figure 1 depicts schematically a flow chart describing the method of increasing load of a four stroke internal combustion piston engine. In the method the engine is first operated so as to control the exhaust gas recycling, an amount of the gaseous fuel and an amount of liquid fuel in the charge, and the air so as to ignite the by homogeneous charge compression ignition HCCl. When at least one variable indicative of engine's load L exceeds a predetermined transition level of the variable Lₜᵣₐₙₛ, the load of the engine into a high load range mode in which the engine is operated so as to initiate reactivity controlled compression ignition RCCI. The at least one variable indicative of engine's load L is determined constantly or intermittently during the engine is running, and the variable indicative of engine's load is compared to a predetermined transition level of the variable Lₜᵣₐₙₛ, and when the at least one variable indicative of engine's load is less than or equal to the predetermined transition level, the engine is run in a low load range mode using HCCI, and when the at least one variable indicative of engine's load L is more than the predetermined transition level, the engine is run in a high load range mode using RCCI

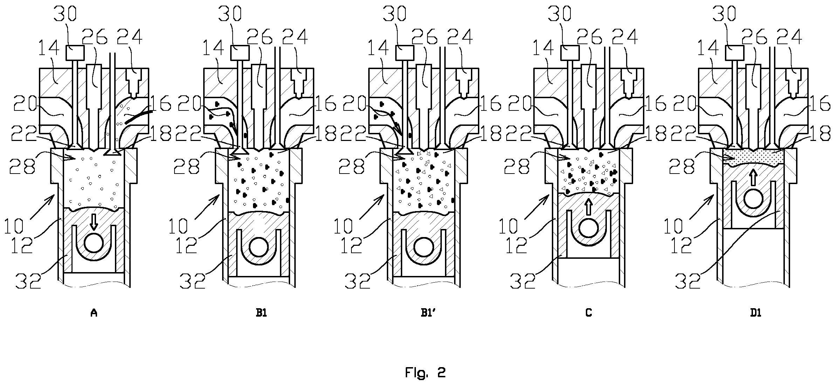

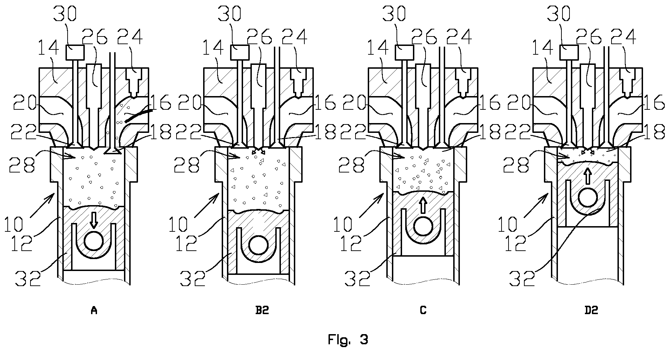

Figures 2 and 3 depict schematically the operational modes of a four stoke internal combustion engine according to the invention. The engine may comprise several cylinders in e.g. V or inline - configuration. The figures 1 and 2 show different stages of the operational modes with a reference to a cylinder 10 of a four stroke internal combustion engine. Each cylinder 10 is comprised of a cylinder sleeve 12 or a bore in a block of the engine. The cylinder is also provided with a cylinder head 14 which is attached to an end of the cylinder sleeve in pressure tight manner. The cylinder head is provided with at least one inlet port 16 provided with an inlet valve 18. The cylinder head is also provided with at least one exhaust port 20 provided with an exhaust valve 22. There is also a gas injector, i.e. a gas admission valve 24 in connection with the inlet port 16, and a liquid fuel injector 26 in connection with the cylinder head 10 configured to inject liquid fuel directly in the a combustion chamber 28 in the cylinder 10. The liquid fuel injector 26 is part of a common rail fuel introduction system (not shown). The inlet valve 18 and its actuation or lifting mechanism is known as such for a skilled person skilled in the art, whereas the exhaust valve 22 is provided with an actuation system 30 which is configured to open the exhaust valve for exhausting the exhaust gases from the combustion chamber 28 and to open the exhaust valve for recycle exhaust gas from the exhaust gas port 20 back to the combustion chamber 28 i.e. to open within a crank angle range from 450 degrees to 670 degrees. The exhaust gas valve 22 actuation system 30 may be for example operated in hydraulic manner, solely or in combination with mechanical synchronization with the position of a piston 32 in the cylinder 10.

According to an embodiment of the invention during the engine is running, at least one variable indicative of engine's load, which load may be understood as a percentage of maximum power the engine rated by the manufacture to produce on its crank shaft, is determined constantly or intermittently. The variable indicative of engine's load is compared to a predetermined transition level of the variable, based on which comparison a decision is made to set the engine to operate alternatively in low load range mode or in a high load range mode. When the at least one variable indicative of engine's load is less than or equal to the predetermined transition level, the engine is run in a low load range mode. Respectively, when the variable indicative of engine's load is more than the predetermined transition level, the engine is run in a high load range mode.

According to an embodiment of the variable indicative of engine's load can be for example cylinder knocking intensity, cylinder maximum pressure, charge pressure, or rate of firing pressure increase.

According to a more specific embodiment of the invention, during the engine is running load of the engine, which load is a percentage of maximum power the engine rated by the manufacture to produce on its crank shaft, is determined constantly or intermittently. The determined actual load of the engine is compared to a predetermined transition load based on which the engine is operated alternatively in low load range or in a high load range. When the actual load of the engine is less than or equal to the predetermined transition load, the engine is run in a low load range mode. Respectively, when the actual load of the engine is more than the predetermined transition load, the engine is run in a high load range mode.

The total load range which the engine can provide is from substantially 0% (in practical circumstances about 5%) to 100% of the rated power of the engine. The predetermined transition load is advantageously between 50 - 80 % load, and therefore according to the invention the low load range is from 0% to the predetermined transition load and the high load range is from the predetermined transition load to 100% load. In some cases the predetermined transition load percent may be even narrower i.e. between 65 - 70 % load.

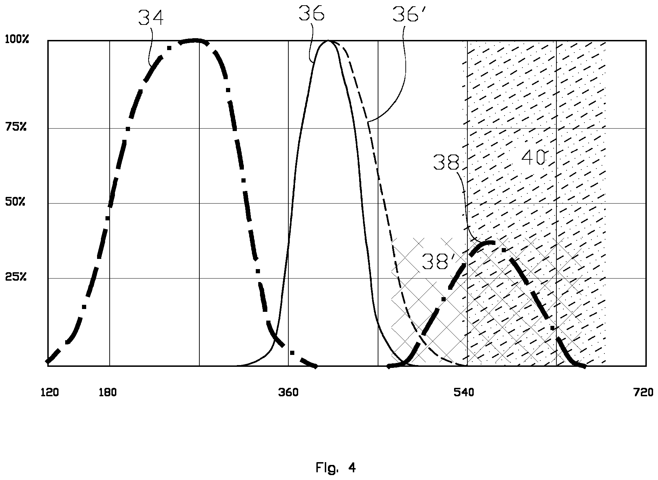

In the figure 2 there is schematically shown the main stages of the low load range mode of operation and in the figure 3 there is schematically shown the main stages of the high load range mode of operation. Figure 4 shows an example of valve timings and liquid fuel injection range in the low load operation mode during a relevant crank angle range of a cylinder. The vertical axis represent the crank angle and the vertical axis represents relative valve opening as well as relative fuel introduction rate. The curve 34 shows the opening, or lift, of an exhaust gas valve 22 during normal exhaust stage, the curve 36 shows the opening of an inlet valve 18 during normal inlet stage. The curve 38 shows the opening of the exhaust gas valve 22 during applying the internal exhaust gas recycling, the internal referring to leading exhaust gases back to the combustion chamber through the exhaust gas port 20 of the cylinder 10. The shaded area 38' shown the applicable variation, or usable range in terms of crank angle (duration) and relative opening (lift) for the opening of the exhaust gas valve 22 during applying the internal exhaust gas recycling. The shaded area 40 shows the usable range for injecting liquid fuel into the combustion chamber 28 of the cylinder. The liquid fuel is injection into the combustion chamber 28 comprises one or multiple, separate injections at different crank angles within the range 40. The amount of the fuel may be controlled by controlling the duration of each injection or opening degree of a control needle of an injector.

Referring to figure 2 and figure 4 the low load range mode of operation is based on the homogeneous charge compression ignition using well-mixed fuels, recirculated exhaust gas and air compressed to the point of auto-ignition. The low load range mode of operation according to the invention comprises a first stage A, which is practised during an intake stroke of a cylinder concerned. In the first stage the piston 32 is moving away from the cylinder head 14, inlet valve 18 is open, the exhaust valve 22 is closed. Gaseous fuel is introduced into the inlet port 12 via the admission valve 24 and gaseous fuel and the air introduced into the combustion chamber 28. The gaseous fuel is mixed with the air. The second stage B1 which comes after the stage A takes place substantially at the bottom dead center of the piston 32. At this stage the exhaust valve 22 is temporarily reopened and exhaust gas is led from an exhaust channel 20 of the cylinder 10 into the combustion chamber 28 of the cylinder. The recirculation of the exhaust gas takes place advantageously within a crank angle range from 450 degrees to 670 degrees, wherein one cycle of the cylinder starts at 0 degrees at TDC of expansion stroke and ends at 720 degrees at TDC of compression stroke. The lift of the valve during the reopening and timing of the reopening is controlled based on the at least one variable indicative of engine's load.

According to an advantageous embodiment of the invention, during the inlet stroke the intake valve is closed at crank angle 510 degrees at latest and the exhaust gas valve is opened at crank angle 540 at latest and closed again at crank angle 670 at latest.

According to another embodiment of the invention, during the inlet stroke the intake valve is closed at crank angle 540 degrees at latest. This is depicted by the dashed line 36' in the figure 4. The exhaust gas valve is re-opened at crank angle 540 at latest and closed again at crank angle 670 at latest to provide the internal recirculation of the exhaust gas.

Starting after or simultaneously with the stage B1, a stage B1' is practised. In the stage B1' liquid fuel is introduced via the fuel injector 26 directly into the combustion chamber 28 by means of the liquid fuel injector 26. In the stage B1' liquid fuel is advantageously introduced into the combustion chamber 28 of the cylinder within a crank angle range from 540 degrees CA to 680 degrees CA, wherein one cycle of the cylinder starts at 0 degrees CA at TDC of expansion stroke and ends at 720 degrees CA at TDC of compression stroke. During the stage B1' the liquid fuel is injection into the combustion chamber 28 comprises one or more separate injections at different crank angles.

The charge comprising the air, recirculated exhaust gas, gaseous fuel and liquid fuel is compressed as is depicted by the stage C until a point the charge is ignited by homogeneous charge compression ignition in the combustion chamber 28, which is depicted by the stage D1.

Referring to the figure 3 the high load range mode of operation is based on reactivity controlled compression ignition. Reactivity controlled compression ignition, uses two fuels (gaseous fuel and liquid fuel) with different reactivities and one or multiple fuel injections to control air-fuel mixture prior to the ignition using a second portion of liquid fuel. The mixture of gaseous fuel and liquid fuel

The liquid fuel, such as diesel fuel, light fuel oil, marine diesel oil, etc. has its reactivity greater than the gaseous fuel, such as natural gas, methane, propane, methanol, etc. The ignition of the charge comprising the gaseous fuel and the liquid fuel is finally accomplished by compression ignition of the liquid fuel.

The high load range mode of operation according to the invention comprises a first stage A, which is practised during an intake stroke of a cylinder concerned. In the first stage the piston 32 is moving away from the cylinder head 14, inlet valve 18 is open, the exhaust valve 22 is closed. Gaseous fuel in introduced into the inlet port 12 via the admission valve 24 and gaseous fuel and the air introduced into the combustion chamber 28. The gaseous fuel is mixed with the air. The second stage B2 which comes after the stage A takes place substantially at the bottom dead center of the piston 32. In the stage B2 a first portion of liquid fuel is introduced via the fuel injector 26 directly into the combustion chamber 28 by means of the liquid fuel injector 26. During the stage B2 the liquid fuel is injected into the combustion chamber 28 with one or more separate injections at different crank angles. In the stage B2 liquid fuel is advantageously introduced into the combustion chamber 28 of the cylinder within a crank angle range from 510 degrees CA to 680 degrees CA, wherein one cycle of the cylinder starts at 0 degrees CA at TDC of expansion stroke and ends at 720 degrees CA at TDC of compression stroke. The charge comprising the air, gaseous fuel and liquid fuel is compressed as is depicted by the stage C until a point where the charge is ignited by injecting a second portion of liquid fuel into the combustion chamber 28 of the cylinder 10 within a crank angle range from 665 degrees CA to 720 degrees CA, which is depicted by the stage D2.

The predetermined transition load is defined separately for each case. According to an embodiment of the invention the predetermined transition load - or the predetermined transition level of the variable indicative of engine's load - can be a variable which is determined during the running of the engine by monitoring the combustion parameters, advantageously at least knock level, in each cylinder of the engine. Thus when the knock level, or maximum firing pressure, exceeds a set knock limit level, the engine is shifted from the low load range mode to the high load range mode.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. Method of increasing load in a four stoke internal combustion engine comprising operating the engine in a low load range mode comprising steps of
- introducing gaseous fuel (24) into the intake air during an intake stroke of the engine
- introducing the gaseous fuel (24) and intake air into a combustion chamber (28) of a cylinder (10) of the engine during the intake stroke, and
- leading exhaust gas into the combustion chamber of the cylinder (10)
- introducing liquid fuel (26) into the combustion chamber of the cylinder
- compressing the charge comprising the air, the gaseous fuel, the liquid fuel and the recirculated exhaust gas in the combustion chamber (28)
- igniting the charge by compression ignition in the combustion chamber and when at least one variable indicative of engine's load exceeds a predetermined transition level of the variable, increasing the load of the engine into a high load range mode comprising steps of
- introducing gaseous fuel (24) into the intake air
- introducing the gaseous fuel and the intake air into a combustion chamber (28) of a cylinder (10) of the engine during an intake stroke, and
- introducing a first portion of liquid fuel (26) into the combustion chamber (28) of the cylinder
- compressing the charge comprising the air, the gaseous fuel and the liquid fuel in the combustion chamber
- injecting a second portion of liquid fuel (26) into the combustion chamber (28) for initiating reactivity controlled compression ignition.

2. Method of increasing load in a four stoke internal combustion engine according to claim 1, **characterized in that** at least one variable indicative of engine's load is determined constantly or intermittently during the engine is running, and the variable indicative of engine's load is compared to a predetermined transition level of the variable, and when the at least one variable indicative of engine's load is less than or equal to the predetermined transition level, the engine is run in a low load range mode, and when the at least one variable indicative of engine's load is more than the predetermined transition level, the engine is run in a high load range mode.

3. Method of increasing load in a four stoke internal combustion engine according to claim 1, **characterized in that** the low load range is from 0% to a predetermined transition load, and the high load range is from the predetermined transition load to 100% load, wherein the predetermined transition load is between 50 - 80 % load.

4. Method of increasing load in a four stoke internal combustion engine according to claim 3, **characterized in that** the predetermined transition load percent is between 65 - 70 % load.

5. Method of increasing load in a four stoke internal combustion engine according to claim 1, **characterized in that** in the low load range running exhaust gas is led from an exhaust channel of the cylinder into the combustion chamber of the cylinder within a crank angle range from 450 degrees to 670 degrees, wherein one cycle of the cylinder starts at 0 degrees at TDC of expansion stroke and ends at 720 degrees at TDC of compression stroke.

6. Method of increasing load in a four stoke internal combustion engine according to claim 1 or 5, **characterized in that** in the low load range running exhaust gas is led directly from an exhaust channel of the cylinder into the combustion chamber of the cylinder through an exhaust port of the cylinder.

7. Method of increasing load in a four stoke internal combustion engine according to claim 6, **characterized in that** exhaust gas is led from an exhaust channel of the cylinder into the combustion chamber of the cylinder by opening an exhaust valve in the exhaust port.

8. Method of increasing load in a four stoke internal combustion engine according to claim 1 or 5, **characterized in that** in the low load range running liquid fuel is introduced into the combustion chamber of the cylinder within a crank angle range from 510 degrees CA to 680degrees CA, wherein one cycle of the cylinder starts at 0 degrees CA at TDC of expansion stroke and ends at 720 degrees CA at TDC of compression stroke.

9. Method of increasing load in a four stoke internal combustion engine according to claim 7 and 1, **characterized in that** in the low load range running the timing and/or duration of the exhaust valve opening, an amount of the gaseous fuel and an amount of liquid fuel in the charge are controlled so as to ignite the charge at desired crank angle between 665 - 720 degrees CA by homogeneous charge compression ignition, wherein one cycle of the cylinder starts at 0 degrees CA at TDC of expansion stroke and ends at 720 degrees CA at TDC of compression stroke.

10. Method of increasing load in a four stoke internal combustion engine according to claim 1, **characterized in that** the low load range running comprising liquid fuel into the combustion chamber comprises one or more separate injections at different crank angles.

11. Method of increasing load in a four stoke internal combustion engine according to claim 1, **characterized in that** the high load range running the first portion of the liquid fuel is introduced into the combustion chamber of the cylinder within a crank angle range from 510 degrees CA to 680 degrees CA, wherein one cycle of the cylinder starts at 0 degrees CA at TDC of expansion stroke and ends at 720 degrees CA at TDC of compression stroke.

12. Method of increasing load in a four stoke internal combustion engine according to claim 1 or 11, **characterized in that** the high load range running the second portion of the liquid fuel is introduced in into the combustion chamber at crank angle between 665 - 720 degrees CA, wherein one cycle of the cylinder starts at 0 degrees CA at TDC of expansion stroke and ends at 720 degrees CA at TDC of compression stroke.

13. A computer readable memory device comprising instructions which, when executed by a computer, cause the computer to carry out a method of any one of the claims 1 to 12.

## Patentansprüche

1. Verfahren zum Erhöhen der Last in einem Viertakt-Verbrennungsmotor, umfassend das Betreiben des Motors in einem Niedriglastbereichsmodus, umfassend die folgenden Schritte
- Einführen von gasförmigem Kraftstoff (24) in die Ansaugluft während eines Ansaughubs des Motors
- Einführen des gasförmigen Kraftstoffs (24) und der Ansaugluft in eine Verbrennungskammer (28) eines Zylinders (10) des Motors während des Ansaughubs, und
- Leiten von Abgas in die Verbrennungskammer des Zylinders (10)
- Einführen von flüssigem Kraftstoff (26) in die Verbrennungskammer des Zylinders
- Komprimieren der Ladung, die die Luft, den gasförmigen Kraftstoff, den flüssigen Kraftstoff und das zurückgeführte Abgas in der Verbrennungskammer (28) umfasst
- Zünden der Ladung durch Kompressionszündung in der Verbrennungskammer,
und wenn mindestens eine Variable anzeigt, dass die Motorlast einen vorbestimmten Übergangspegel der Variablen überschreitet, Erhöhen der Motorlast in einen Hochlastbereichsmodus, umfassend die folgenden Schritte
- Einführen von gasförmigem Kraftstoff (24) in die Ansaugluft
- Einführen des gasförmigen Kraftstoffs und der Ansaugluft in eine Verbrennungskammer (28) eines Zylinders (10) des Motors während eines Ansaughubs, und
- Einführen eines ersten Teils von flüssigem Kraftstoff (26) in die Verbrennungskammer (28) des Zylinders
- Komprimieren der Ladung, die die Luft, den gasförmigen Kraftstoff und den flüssigen Kraftstoff in der Brennkammer umfasst
- Einspritzen eines zweiten Teils von flüssigem Kraftstoff (26) in die Verbrennungskammer (28) zum Einleiten einer reaktivitätsgesteuerten Kompressionszündung.

2. Verfahren zum Erhöhen der Last in einem Viertakt-Verbrennungsmotor nach Anspruch 1, **dadurch gekennzeichnet, dass** mindestens eine die Motorlast anzeigende Variable konstant oder intermittierend bestimmt wird, während der Motor läuft, und die die Motorlast anzeigende Variable mit einem vorbestimmten Übergangspegel der Variablen verglichen wird, und wenn die mindestens eine die Motorlast anzeigende Variable kleiner oder gleich dem vorbestimmten Übergangspegel ist, der Motor in einem Niedriglastbereichsmodus betrieben wird, und wenn die mindestens eine die Motorlast anzeigende Variable größer als der vorbestimmte Übergangspegel ist, der Motor in einem Hochlastbereichsmodus betrieben wird.

3. Verfahren zum Erhöhen der Last in einem Viertakt-Verbrennungsmotor nach Anspruch 1, **dadurch gekennzeichnet, dass** der Niedriglastbereich von 0 % bis zu einer vorbestimmten Übergangslast reicht und der Hochlastbereich von der vorbestimmten Übergangslast bis zu 100 % Last reicht, wobei die vorbestimmte Übergangslast zwischen 50 bis 80 % Last liegt.

4. Verfahren zum Erhöhen der Last in einem Viertakt-Verbrennungsmotor nach Anspruch 3, **dadurch gekennzeichnet, dass** der vorbestimmte Übergangslastprozentsatz zwischen 65 bis 70 % Last liegt.

5. Verfahren zum Erhöhen der Last in einem Viertakt-Verbrennungsmotor nach Anspruch 1, **dadurch gekennzeichnet, dass** im Niedriglastbereich laufendes Abgas von einem Auslasskanal des Zylinders in die Verbrennungskammer des Zylinders innerhalb eines Kurbelwinkelbereichs von 450 Grad bis 670 Grad geleitet wird, wobei ein Zyklus des Zylinders bei 0 Grad am OT des Expansionshubs beginnt und bei 720 Grad am OT des Kompressionshubs endet.

6. Verfahren zum Erhöhen der Last in einem Viertakt-Verbrennungsmotor nach Anspruch 1 oder 5, **dadurch gekennzeichnet, dass** im Niedriglastbereich laufendes Abgas direkt von einem Auslasskanal des Zylinders durch einen Auslasskanal des Zylinders in die Verbrennungskammer des Zylinders geleitet wird.

7. Verfahren zum Erhöhen der Last in einem Viertakt-Verbrennungsmotor nach Anspruch 6, **dadurch gekennzeichnet, dass** Abgas von einem Auslasskanal des Zylinders in die Verbrennungskammer des Zylinders geleitet wird, indem ein Auslassventil in der Auslassöffnung geöffnet wird.

8. Verfahren zum Erhöhen der Last in einem Viertakt-Verbrennungsmotor nach Anspruch 1 oder 5, **dadurch gekennzeichnet, dass** im Niederlastbereich laufender flüssiger Kraftstoff in die Verbrennungskammer des Zylinders innerhalb eines Kurbelwinkelbereichs von 510 Grad KW bis 680 Grad KW eingeleitet wird, wobei ein Zyklus des Zylinders bei 0 Grad KW am OT des Expansionshubs beginnt und bei 720 Grad KW am OT des Kompressionshubs endet.

9. Verfahren zum Erhöhen der Last in einem Viertakt-Verbrennungsmotor nach Anspruch 7 und 1, **dadurch gekennzeichnet, dass** im Niedriglastbereich der Zeitpunkt und/oder die Dauer der Öffnung des Auslassventils, eine Menge des gasförmigen Kraftstoffs und eine Menge des flüssigen Kraftstoffs in der Ladung gesteuert werden, um die Ladung bei einem gewünschten Kurbelwinkel zwischen 665 bis 720 Grad KW durch Kompressionszündung mit homogener Ladung zu zünden, wobei ein Zyklus des Zylinders bei 0 Grad KW am OT des Expansionshubs beginnt und bei 720 Grad KW am OT des Kompressionshubs endet.

10. Verfahren zum Erhöhen der Last in einem Viertakt-Verbrennungsmotor nach Anspruch 1, **dadurch gekennzeichnet, dass** der mit flüssigem Kraftstoff in die Verbrennungskammer laufende Niedriglastbereich eine oder mehrere getrennte Einspritzungen bei unterschiedlichen Kurbelwinkeln umfasst.

11. Verfahren zum Erhöhen der Last in einem Viertakt-Verbrennungsmotor nach Anspruch 1, **dadurch gekennzeichnet, dass** der Hochlastbereich, in dem der erste Teil des flüssigen Kraftstoffs läuft, in die Verbrennungskammer des Zylinders innerhalb eines Kurbelwinkelbereichs von 510 Grad KW bis 680 Grad KW eingeführt wird, wobei ein Zyklus des Zylinders bei 0 Grad KW am OT des Expansionshubs beginnt und bei 720 Grad KW am OT des Kompressionshubs endet.

12. Verfahren zum Erhöhen der Last in einem Viertakt-Verbrennungsmotor nach Anspruch 1 oder 11, **dadurch gekennzeichnet, dass** der im Hochlastbereich laufende zweite Teil des flüssigen Kraftstoffs bei einem Kurbelwinkel zwischen 665 bis 720 Grad KW in die Verbrennungskammer eingeführt wird, wobei ein Zyklus des Zylinders bei 0 Grad KW am OT des Expansionshubs beginnt und bei 720 Grad KW am OT des Kompressionshubs endet.

13. Computerlesbares Speichervorrichtung, umfassend Anweisungen, die, wenn sie von einem Computer ausgeführt werden, veranlassen, dass der Computer ein Verfahren nach einem der Ansprüche 1 bis 12 ausführt.

## Revendications

1. Procédé d'augmentation de la charge dans un moteur à combustion interne à quatre temps comprenant le fonctionnement du moteur dans un mode de plage à faible charge comprenant les étapes consistant à
- introduire du carburant gazeux (24) dans l'air d'entrée durant une course d'entrée du moteur
- introduire le carburant gazeux (24) et l'air d'entrée dans une chambre de combustion (28) d'un cylindre (10) du moteur durant la course d'entrée, et
- conduire le gaz d'échappement dans la chambre de combustion du cylindre (10)
- introduire du carburant liquide (26) dans la chambre de combustion du cylindre
- comprimer la charge comprenant l'air, le carburant gazeux, le carburant liquide et le gaz d'échappement en recirculation dans la chambre de combustion (28)
- mettre le feu à la charge par ignition par compression dans la chambre de combustion
et quand au moins une variable indicatrice de la charge du moteur dépasse un niveau de transition prédéterminé de la variable, augmenter la charge du moteur dans un mode de plage à charge élevée comprenant les étapes consistant à
- introduire du carburant gazeux (24) dans l'air d'entrée
- introduire le carburant gazeux et l'air d'entrée dans une chambre de combustion (28) d'un cylindre (10) du moteur durant une course d'entrée, et
- introduire une première partie de carburant liquide (26) dans la chambre de combustion (28) du cylindre
- comprimer la charge comprenant l'air, le carburant gazeux et le carburant liquide dans la chambre de combustion
- injecter une seconde partie de carburant liquide (26) dans la chambre de combustion (28) pour initier l'ignition par compression contrôlée par la réactivité.

2. Procédé d'augmentation de la charge dans un moteur à combustion interne à quatre temps selon la revendication 1, **caractérisé en ce qu'**au moins une variable indicatrice de la charge du moteur est déterminée constamment ou par intermittence durant le fonctionnement du moteur, et la variable indicatrice de la charge du moteur est comparée à un niveau de transition prédéterminé de la variable, et quand l'au moins une variable indicatrice de la charge du moteur est inférieure ou égale au niveau de transition prédéterminé, le moteur fonctionne dans un mode de plage à faible charge, et quand l'au moins une variable indicatrice de la charge du moteur est supérieure au niveau de transition prédéterminé, le moteur fonctionne dans un mode de plage à charge élevée.

3. Procédé d'augmentation de charge dans un moteur à combustion interne à quatre temps selon la revendication 1, **caractérisé en ce que** la plage à faible charge est de 0 % à une charge de transition prédéterminée, et la plage à charge élevée est de la charge de transition prédéterminée à une charge de 100 %, la charge de transition prédéterminée étant comprise entre 50 à 80 % de la charge.

4. Procédé d'augmentation de charge dans un moteur à combustion interne à quatre temps selon la revendication 3, **caractérisé en ce que** le pourcentage de charge prédéterminé est compris entre 65 à 70 % de la charge.

5. Procédé d'augmentation de la charge dans un moteur à combustion interne à quatre temps selon la revendication 3, **caractérisé en ce que** le gaz d'échappement fonctionnant dans la plage à faible charge est conduit d'un canal d'échappement du cylindre dans la chambre de combustion du cylindre dans une plage d'angle de bielle de 450 degrés à 670 degrés, un cycle du cylindre débutant à 0 degrés au TDC de course d'expansion et se terminant à 720 degrés au TDC de la course de compression.

6. Procédé d'augmentation de charge dans un moteur à combustion interne à quatre temps selon la revendication 1 ou 5, **caractérisé en ce que** le gaz d'échappement fonctionnant dans la plage à faible charge est conduit directement d'un canal d'échappement du cylindre dans la chambre de combustion du cylindre par une porte d'échappement du cylindre.

7. Procédé d'augmentation de la charge dans un moteur à combustion interne à quatre temps selon la revendication 6, **caractérisé en ce que** le gaz d'échappement est conduit d'un canal d'échappement du cylindre dans la chambre de combustion du cylindre par l'ouverture d'une vanne d'échappement dans la porte d'échappement.

8. Procédé d'augmentation de la charge dans un moteur à combustion interne à quatre temps selon la revendication 1 ou 5, **caractérisé en ce que** le carburant liquide fonctionnant dans la plage à faible charge est introduit dans la chambre de combustion du cylindre dans une plage d'angle de bielle de 510 degrés CA à 680 degrés CA, un cycle du cylindre débutant à 0 degrés CA au TDC de course d'expansion et se terminant à 720 degrés au TDC de la course de compression.

9. Procédé d'augmentation de la charge dans un moteur à combustion interne à quatre temps selon la revendication 7 et 1, **caractérisé en ce que** dans le timing et/ou la durée de l'ouverture de vanne d'échappement fonctionnant dans la plage à faible charge, une quantité de carburant gazeux et une quantité de carburant liquide dans la charge sont contrôlées de manière à mettre le feu à la charge à un angle de bielle souhaité entre 665 et 720 degrés CA par ignition par compression de charge homogène, un cycle du cylindre débutant à 0 degrés CA au TDC de course d'expansion et se terminant à 720 degrés CA au TDC de course de compression.

10. Procédé d'augmentation de la charge dans un moteur à combustion interne à quatre temps selon la revendication 1, **caractérisé en ce que** la plage à faible charge fonctionnant comprenant le carburant liquide dans la chambre de combustion comprend une ou plusieurs injections séparées à différents angles de bielle.

11. Procédé d'augmentation de la charge dans un moteur à combustion interne à quatre temps selon la revendication 1, **caractérisé en ce que** la première partie du carburant liquide fonctionnant dans la plage à charge élevée est introduite dans la chambre de combustion du cylindre avec une plage d'angle de bielle de 510 degrés CA à 680 degrés CA, un cycle du cylindre débutant à 0 degrés CA au TDC de course d'expansion et se terminant à 720 degrés CA au TDC de la course de compression.

12. Procédé d'augmentation de la charge dans un moteur à combustion interne à quatre temps selon la revendication 1 ou 11, **caractérisé en ce que** la seconde partie du carburant liquide fonctionnant dans la plage à charge élevée est introduite dans le moteur à combustion interne à un angle de bielle compris entre 665 et 720 degrés CA, un cycle du cylindre débutant à 0 degrés CA au TDC de course d'expansion et se terminant à 720 degrés au TDC de course de compression.

13. Dispositif de mémoire lisible sur ordinateur comprenant des instructions qui, quand elles sont exécutées par un ordinateur, entraînent l'ordinateur à réaliser un procédé selon l'une quelconque des revendications 1 à 12.
